# EUROPÄISCHE PATENTSCHRIFT

(11) **EP 0 814 934 B1**
(45) Veröffentlichungstag und Bekanntmachung des Hinweises auf die Patenterteilung: **12.05.1999**
(21) Anmeldenummer: 96903879.3
(22) Anmeldetag: 20.02.1996
(51) Int. Cl.: B23D 51/10, B23B 31/113

(54) **STICHSÄGEBLATTAUFSPANNVORRICHTUNG**
SAW BLADE CLAMPING DEVICE FOR PIERCING SAW MACHINES
DISPOSITIF DE SERRAGE DE LA LAME D'UNE SCIE A GUICHET

(30) Priorität: 16.03.1995 DE 19509539
(43) Veröffentlichungstag der Anmeldung: 07.01.1998
(73) Patentinhaber: ROBERT BOSCH GMBH, 70442 Stuttgart (DE)
(72) Erfinder: HÖLDERLIN, Andreas, D-74354 Besigheim (DE); DI NICOLANTONIO, Aldo, CH-4565 Recherswil (CH); GENTINETTA, René, CH-3942 Niedergesteln (CH)
(86) Internationale Anmeldenummer: DE9600258
(87) Internationale Veröffentlichungsnummer: WO9628274

(56) Entgegenhaltungen:
- EP-A- 0 544 129
- EP-A- 0 623 413
- DE-A- 4 102 011
- US-A- 3 663 028
- US-A- 3 730 540
- US-A- 3 750 283
- US-A- 4 204 692

## Beschreibung

### Stand der Technik

Die Erfindung geht aus von einer Stichsägemaschine nach der Gattung des Anspruchs 1.

Durch die EP 404 764 und durch die US 3 750 283 sind Stichsägemaschinen bekannt, bei denen das Sägeblatt verhältnismäßig zuverlässig gespannt ist und leicht entnehmbar und wieder einspannbar ist. Die bekannten Lösungen haben dabei den Nachteil, daß die Spanneinrichtung zum Sägeblattwechsel nahe dem Sägeblatt umständlich, d.h. mit beiden Händen bedient werden muß: Eine Hand fuhrt das Sägeblatt ein, während die andere Hand den Spannmechanismus betätigt und gleichzeitig die Maschine halten muß. Dabei besteht Verletzungsgefahr durch Berühren der Sägezähne, weil es schwierig ist, beim Sägeblattwechsel gleichzeitig die Stichsäge sicher festzuhalten.

Fur einen sicheren Sägeblattwechsel muß die Stichsägemaschine beispielsweise in einen Schraubstock gespannt oder auf eine Unterlage oder gegen den Körper gehalten werden, damit beide Hände zum Sägeblattwechsel frei sind. Diese sichere Variante des Sägeblattwechsels ist allerdings sehr zeitaufwendig, wobei nicht immer eine Spannvorrichtung zum Festhalten der Stichsäge vorhanden ist.

### Vorteile der Erfindung

Die erfindungsgemäße Stichsägemaschine mit den kennzeichnenden Merkmalen des Anspruchs 1 hat demgegenüber den Vorteil, daß mit nur einer Hand das Sägeblatt bequem und schnell zu wechseln ist, wobei mit der anderen Hand die Maschine sicher gehalten werden kann, ohne daß eine Spannvorrichtung zum Halten der Maschine erforderlich ist.

Durch die bequeme, sichere Handhabung ist die Verletzungsgefahr beim Sägeblattwechsel wesentlich verringert. Außerdem ist der Zeitaufwand für einen Sägeblattwechsel deutlich geringer als bei den bekannten Stichsägemaschinen. Dadurch kann insbesondere im gewerblichen Bereich eine höhere Arbeitsleistung erzielt werden.

Der Anspruch 10 betrifft eine Spanneinrichtung für eine derartige Stichsägemaschine.

Weitere Vorteile ergeben sich aus den abhängigen Ansprüchen.

### Zeichnung

Ausführungsbeispiele der vorliegenden Erfindung sind in der nachfolgenden Beschreibung anhand der zugehörigen Zeichnung näher erläutert.

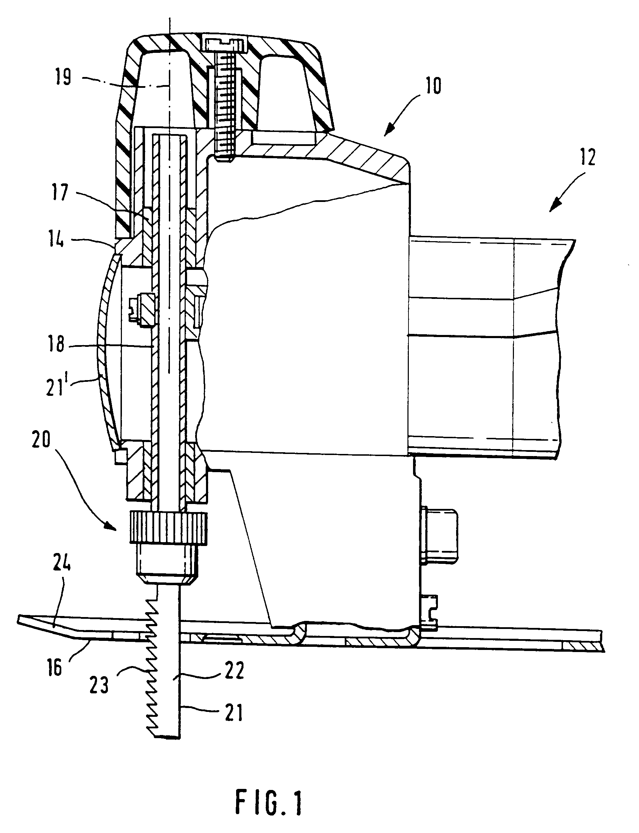

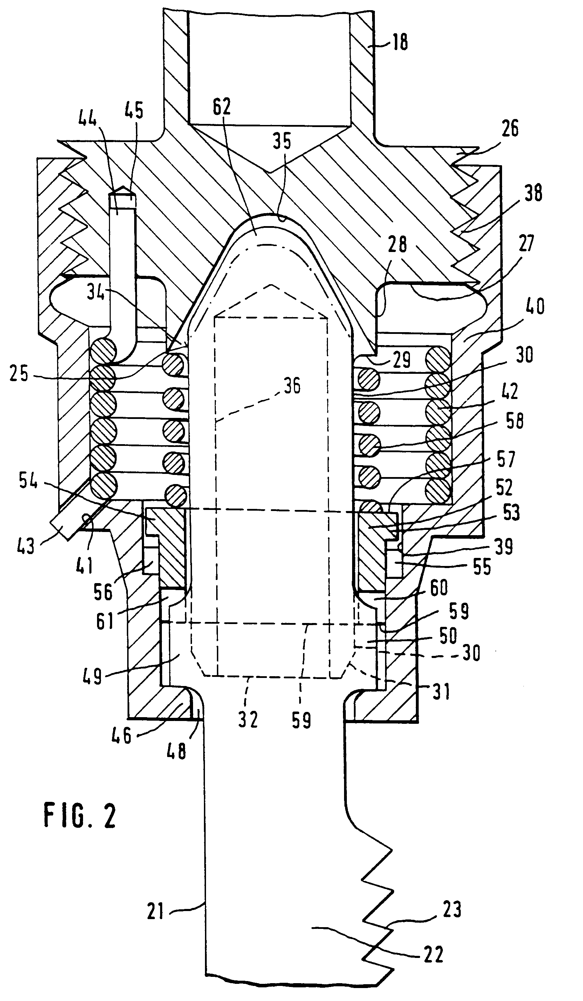

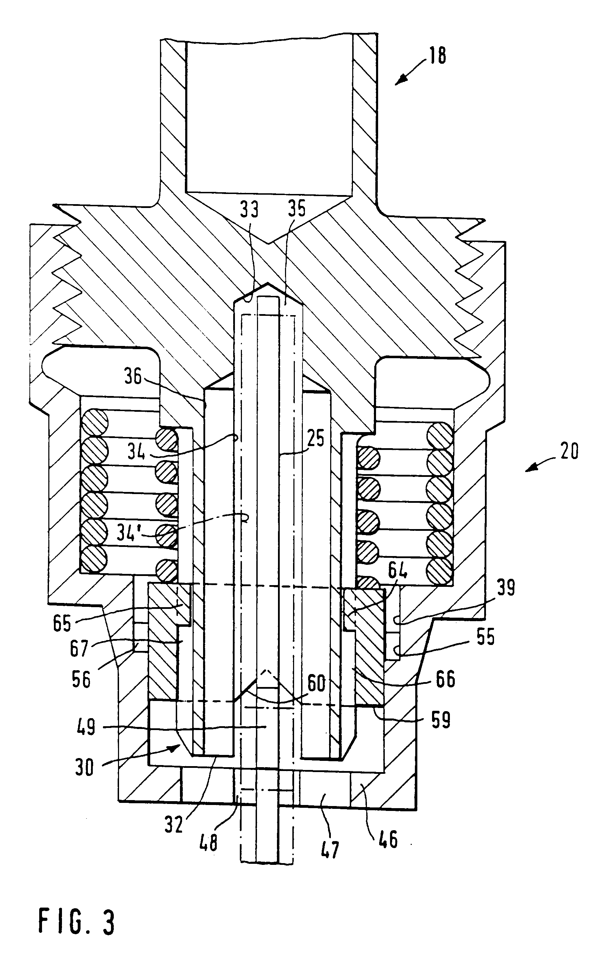

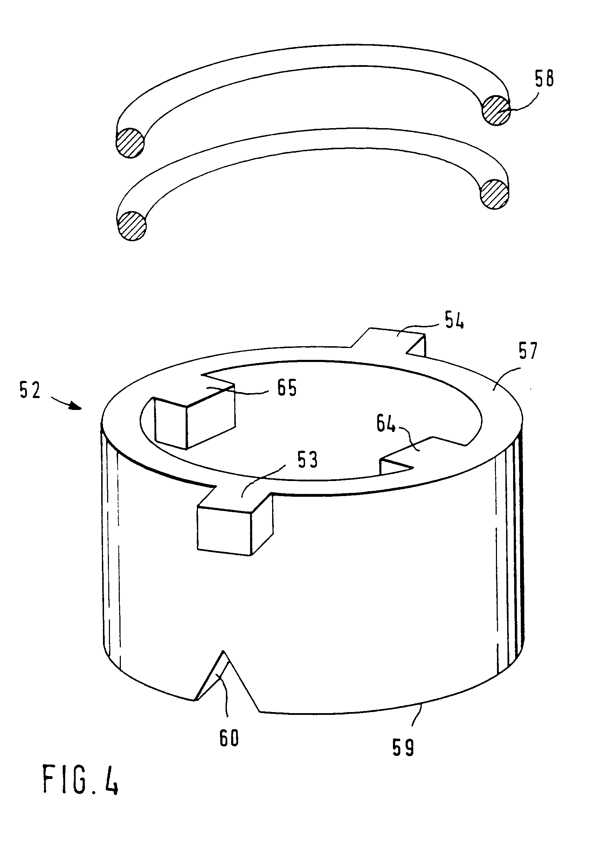

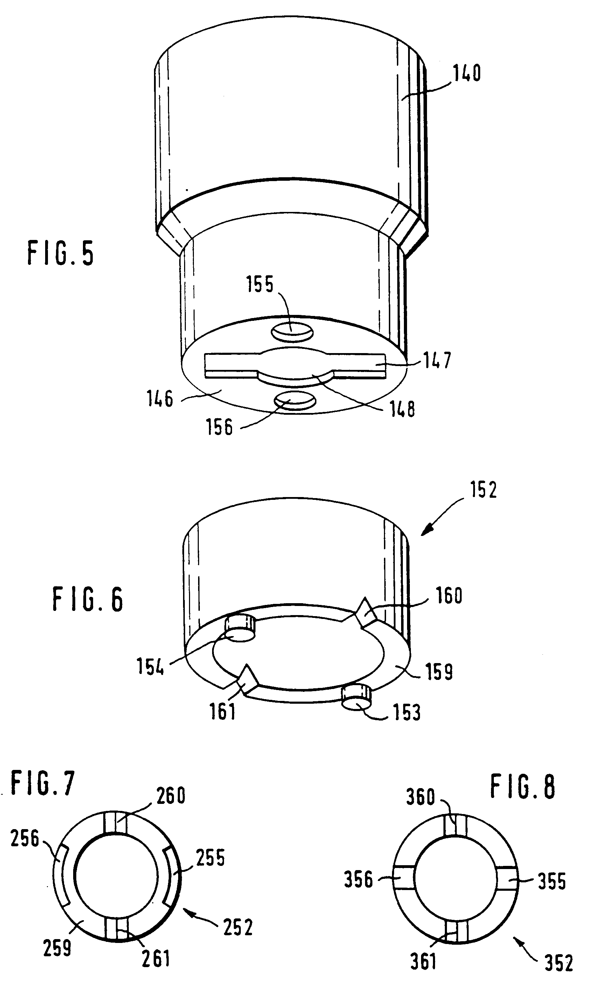

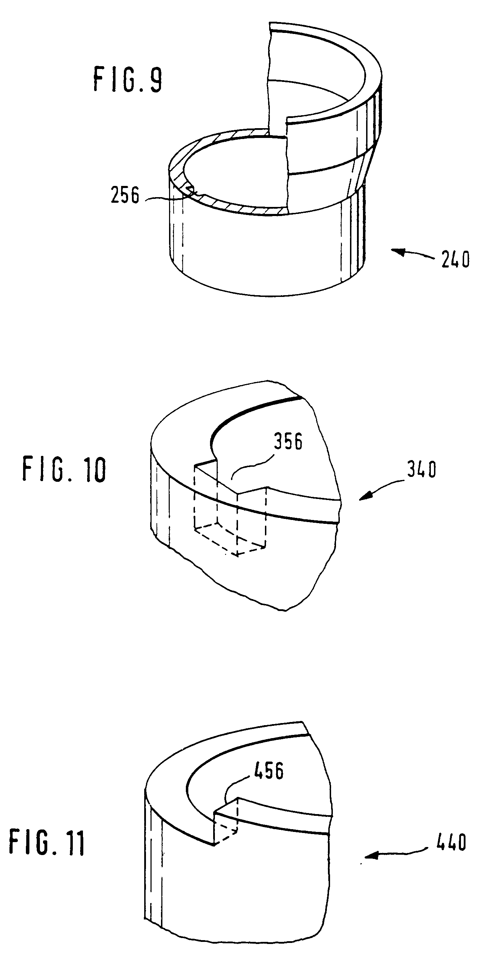

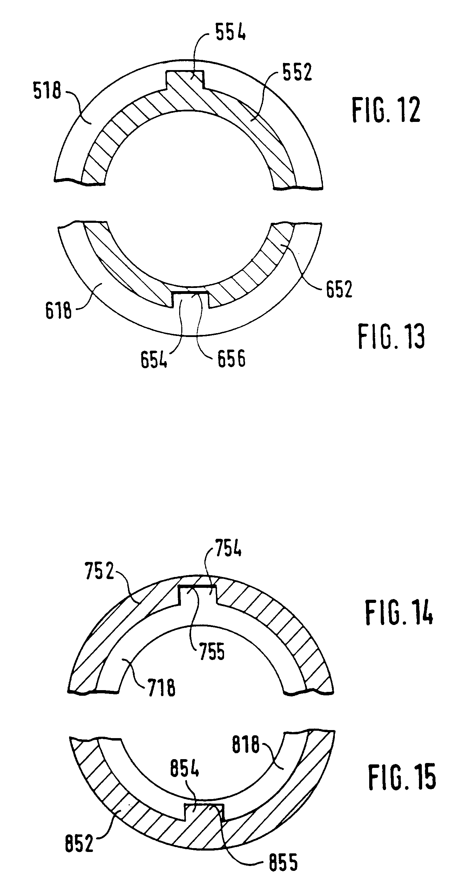

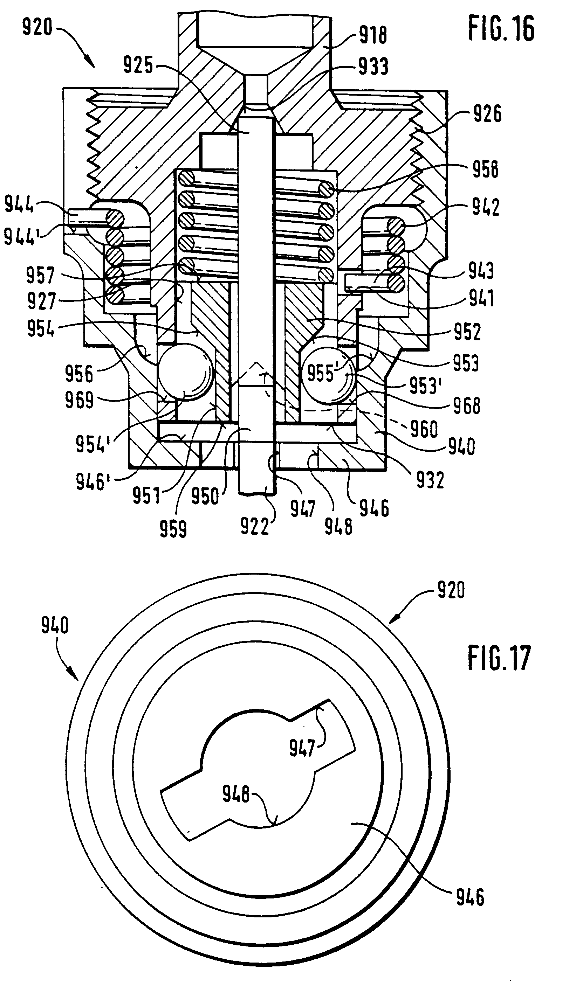

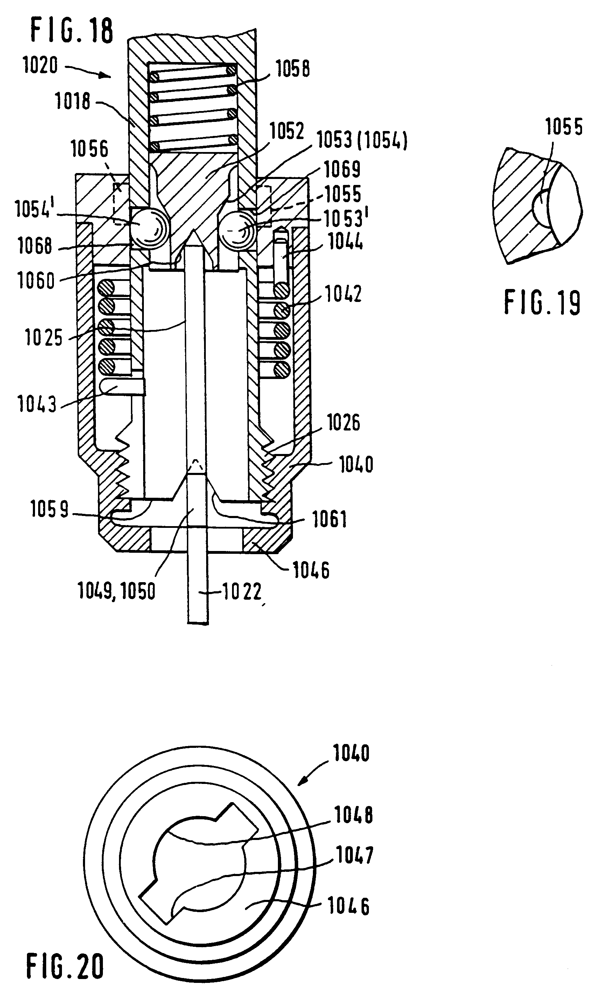

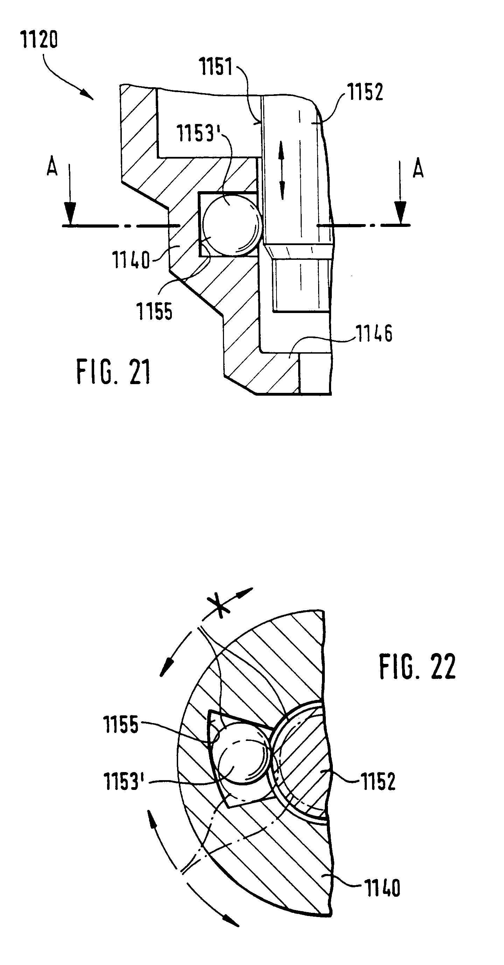

Es zeigen Figur 1 einen Teillängsschnit eines Ausführungsbeispiels der erfindungsgemäßen Stichsäge, Figur 2 einen Längsschnitt der Einrichtung zum Spannen des Sägeblatts, Figur 3 die um 90° um ihre Längsachse gedrehte Darstellung gemäß Figur 2 , Figur 4 ein Ausführungsbeispiel einer Zentrierhülse gemäß den Figuren 2 und 3, Figur 5 ein Ausführungsbeispiel einer Spannhülse, Figur 6 ein weiteres Ausführungsbeispiel einer Zentrierhülse, die Figuren 7, 8 zwei weitere Ausführungsbeispiele von unten betrachteter Zentrierhülsen, die Figuren 9, 10, 11 drei Ausführungsbeispiele von Spannhülsen, die Figuren 12, 13, 14, 15 den Querschnitt je zweier Varianten von Hubstange- Zentrierhülsenpaarungen, Figur 16 einen Längsschnitt eines weiteren Ausführungsbeispiels einer Spanneinrichtung, Figur 17 die Ansicht gemäß Figur 16 von unten, Figur 18 einen Längsschnitt eines weiteren Ausführungsbeispiels einer Spanneinrichtung, Figur 19 einen Querschnitt der Rastnut als Ausschnitt aus Figur 18, Figur 20 eine Ansicht der Figur 18 von unten und die Figuren 21, 22 ein weiteres Ausführungsbeispiel der Einrichtung zum Spannen als Längsschnitt bzw. Querschnitt.

### Beschreibung der Ausführungsbeispiele

In Figur 1 ist eine Stichsäge 10 gezeigt mit einem als Griff ausgestalteten Maschinengehäuse 12 und einem Getriebegehäuse 14, die auf eine Fußplatte 16 montiert sind, mittels der die Stichsägemaschine 10 auf einem nicht dargestellten Werkstück führbar abgestützt ist.

Eine aus dem Getriebegehäuse 14 nach unten austretende rohrartige Hubstange 18 mit der Hubstangenachse 19 trägt am unteren Ende eine hülsenartige Einrichtung 20. Diese ist vorgespannt von einer Drehfeder 42 (Fig. 2) und dient zum Spannen eines Sägeblatts 22 mit einem Sägeblattrücken 21 und einer Zahnseite 23, das eine V-förmige Ausnehmung 24 der Fußplatte 16 durchragt.

In Figur 2 ist ein Längsschnitt eines Ausführungsbeispiels des unteren Bereichs einer Hubstange 18 gezeigt. Diese geht in Betrachtungsrichtung nach unten von einem oberen rohrartigen Bereich in einen Wellenbund größeren Durchmessers mit einem Außengewindestück 26 über und anschließend über zwei Stufen 27, 29 in kleinere Durchmesserbereiche 28, 30 über. Der kleinere Durchmesserbereich 30 setzt sich als Rohrstutzen fort, dessen gestrichelt gezeichnetes Ende in eine Fase 31 und in die ebenfalls gestrichelt gezeichnete Stirnkante 32 übergeht. Die Längskanten des Rohrstutzens 30 fallen mit der Kontur des Sägeblatteinspanneindes des Sägeblatts 22 zusammen. Dies wird klar beim Vergleich der Figuren 2 und 3.

Die Hubstange 18 trägt einen mittigen, von der Unterkante 32 bis in das Außengewindestück 26 axial verlaufenden Zentrierschlitz 34 (Fig. 3). Im Außengewindestück 26 bildet der Zentrierschlitz 34 ein sich verjüngendes Zentrierschlitzende 35. Der Rohrstutzen 30 ist mit einer gestrichelt gezeichneten zentrischen Innenbohrung 36 versehen.

Das Außengewindestück 26 wird von einem Innengewindestück 38 einer Spannhülse 40 umgriffen, die über die Drehfeder 42 mit der Hubstange 18 gekoppelt ist. Ein unteres Federende 43 greift dazu in einen radialen Durchbruch 41 der Spannhülse 40, während ein oberes Federende 44 in einer axialen Bohrung 45 im Außengewindestück 26 steckt.

Die Spannhülse 40 geht an in ihrem unteren Ende in einen radial eingezogenen Kragen 46 über, der eine Durchtrittsöffnung 48 für das Sägeblatt 22 enthält. An der inneren Stirnseite des Kragens 46 stützt sich das Sägeblatt 22 mit den unteren Stirnseiten seiner Nasen 49, 50 ab. Mit den oberen Stirnseiten seiner Nasen 49, 50 stützt sich das Sägeblatt 22 gegen die untere Stirnseite einer Zentrierhülse 52. Die Zentrierhülse 52 greift in der Spannstellung der Spannhülse 40 mit Außennocken 53, 54 in einen Freistich 39 der Spannhülse 40, der axial nach unten in Rastnuten 55, 56 übergeht. Dadurch ist in dieser Position die Spannhülse 40 gegenüber der Zentrierhülse 52 verdrehbar.

In der Geöffnet-Stellung der Spannhülse 40 rasten nach Austritt des Sägeblatts 22 die Außennocken 53, 54 durch axiales Verschieben der Zentrierhülse 52 in die Rastnuten 55, 56 der Spannhülse 40 ein und arretieren diese in der Verdrehposition gegenüber der Hubstange 18.

Zwischen die obere Stirnseite 57 der Zentrierhülse 52 und die Stufe 29 der Hubstange 18 stützt sich eine Druckfeder 58 ab.

Die untere Stirnseite 59 der Zentrierhülse 52 trägt auf ihrem Rand auf diametral gegenüberliegenden Seiten je eine mittige, zueinander fluchtende, V-förmige Zentriernut 60, 61, in die die oberen Stirnseiten der Nasen 49, 50 des Sägeblatts 22 eintreten. Im Zentrierschlitz-Ende 35 des Zentrierschlitzes 34 ist das Sägeblatteinspannende 25 zentriert.

Die Figur 3 zeigt die Hubstange gemäß Figur 2 um 90° um die Längsachse gedreht. Dazu sind nur die Teile bezeichnet oder erwähnt, die zum besseren Verständnis der Figur nötig sind. Hier wird deutlich, daß das obere Zentrierschlitzende 35 des Zentrierschlitzes 34 als V-Profil 33 ausgestaltet ist und daß der Zentrierschlitz 34 die Innenbohrung 36 durchsetzt. Deutlich werden auch die Positionen der Stirnkante 32 der Hubstange 18, der Durchtrittsöffnung 48 und des radialen Schlitzes 47 zum Durchtritt der Nasen 49, 50 des Sägeblatts 22 und die Zentrierposition der Nase 49 des Sägeblatteinspannendes 25 in der V-Nut 60 der Zentrierhülse 52.

Der Zentrierschlitz 34 ist breiter als die Stärke des Sägeblatts 22 im Bereich dessen Einspannendes 25. Eine strichpunktierte Linie 34' innerhalb des Zentrierschlitzes 34 zeigt die Kontur für die maximal in der Einrichtung 20 verwendbare Sägeblattstärke.

Außerdem ist erkennbar, daß die Zentrierhülse 52 mit Innennocken 64, 65 in jeweils einer am Rohrstutzen 30 außen axial verlaufenden Führungsnut 66, 67 verdrehsicher und axialverschieblich gegenüber der Hubstange 18 festhält.

Zum Lösen des Sägeblatts 22 wird die Spannhülse 40 verdreht und damit axial nach unten verschoben, entgegen der Wirkung der Drehfeder 42. Die Spannhülse 40 kann sich gegenüber den Außennocken 53, 54 so lange frei drehen, solange die Unterkante der Außennocken 53, 54 im Freistich 39 positioniert sind. Infolge der Kraft der Druckfeder 58 wird die Zentrierhülse 52 axial nach unten verschoben, wobei die Außennocken 53, 54 in die Rastnuten 55, 56 greifen und sich die Innennocken 64, 65 drehfest am unteren Bereich der Hubstange 18 halten. Dabei stützen sich die Zentriernuten 60, 61 der unteren Stirnseite 59 an den oberen Stirnseiten der Sägeblattnasen 49, 50 ab und folgen gemeinsam mit dem Sägeblatt 22 dessen Axialbewegung nach unten.

Fluchtet der Radialschlitz 47 der Spannhülse 40, der aus den Figuren 17, 20 deutlich wird, zur Sägeblattebene des Sägeblatts 22, kann das Sägeblatt 22 frei nach außen treten. Die drehfest am unteren Bereich der Hubstange 18 angeordnete Zentrierhülse 52 rastet mit den Außennocken 53, 54 in die Rastnuten 55, 56 der Spannhülse 40 ein und hält diese somit gegenüber der Hubstange 18 in der Geöffnet-Position fest.

Beim Wiedereinsetzen eines neuen Sägeblatts 22 durch Einführen dessen Einspannendes 25 in die Durchtrittsöffnung 48 bzw. in Radialschlitz 47 beaufschlagen die Sägeblattnasen 49, 50 die untere Stirnseite 59 der Zentrierhülse 52 und verschieben diese axial nach oben, entgegen der Wirkung der Druckfeder 58. Dadurch werden die Außennocken 53, 54 aus den Rastnuten 55, 56 axial herausgeschoben, so daß die Spannhülse 40 entriegelt wird. Dadurch kann sich die Spannhülse 40 der Vorspannkraft der Drehfeder 42 folgend verdrehen und dabei axial verschieben. Durch Verdrehen des radialen Schlitzes 47 gegenüber der Ebene des Sägeblatts 22 untergreift der Kragen 46 die unteren Stirnseiten der Sägeblattnasen 49, 50 und verschiebt diese weiter axial bis zum Anschlagen des äußersten Sägeblattendes 62 am Zentrierschlitzende 35.

Dadurch ist das neueingesetzte Sägeblatt 22 schnell und bequem mit nur einer Hand bedienbar zentriert und gespannt.

In Figur 4 ist eine räumliche Darstellung der Zentrierhülse 52 gemäß den Figuren 2 und 3 mit der Druckfeder 58 gezeigt. Dabei werden Form und Anordnung der Außennocken 53, 54, der Innennocken 64, 65, der oberen Stirnseite 57, der unteren Stirnseite 59 und der v-förmigen Zentriernut 60 deutlich.

Die Figur 5 zeigt eine Variante einer Spannhülse 140 mit einer Durchtrittsöffnung 148 und einem radialen Schlitz 147 zum Durchtritt eines Sägeblatteinspannendes sowie einen Kragen 146 mit axialen, einander diametral gegenüberliegenden Durchbrüchen, die als Rastbohrung 155, 156 für axiale Außennocken 153, 154 (Figur 6) einer Zentrierhülse 152 dienen.

In Figur 6 ist eine zur gemeinsamen Verwendung mit der Spannhülse 140 gemäß Figur 5 vorgesehene Zentrierhülse 152 gezeigt, die an ihrer unteren Stirnseite 159 zwei V-förmige Zentriernuten 160, 161 und zwei axiale Außennocken 153, 154 trägt, die die Rastbohrungen 155, 156 der Spannhülse 140 gemäß Figur 5 durchtreten sollen.

In den Figuren 7, 8 sind Varianten von Zentrierhülsen 252, 352 abgebildet, die ihre unteren Stirnseiten 259, 359, mit den V-förmigen Zentriernuten 260, 261, 360, 361 zeigen. Außerdem sind Rastausnehmungen 255, 256, 355, 356 gezeigt, die den Nocken nicht dargestellter, entsprechend ausgestalteter Spannhülsen zugeordnet sind.

Die Figuren 9, 10, 11 zeigen Varianten von Spannhülsen 240, 340, 440 in räumlicher Darstellung, teilweise aufgebrochen, bzw. als Teilausschnitt. Deutlich erkennbar sind hier jeweils eine Rastnut 256, 356 bzw. Rastkante 456 zum Eingriff bzw. Anschlag radialer Außennocken oder dergleichen Haltemittel von entsprechend ausgestalteten, nicht dargestellten Zentrierhülsen.

Die in Figur 10 ausschnittsweise gezeigte Spannhülse 340 hat eine viereckige, kastenförmige radiale Rastnut 356 und die in Figur 11 gezeigte Spannhülse 440 hat eine als stufenartiger überrastbarer Anschlag ausgestaltete Rastkante 456, an der Außennocken einer entsprechend ausgestalteten Zentrierhülse die Spannhülse 240 bis 440 drehfest beim Eingriff in die Rastnuten 356 bis 456 gegenüber einer Hubstange festhalten.

Die Figuren 12, 13 zeigen im Querschnitt wie Zentrierhülsen 552, 652 gegenüber Hubstangen 518, 618 angeordnet und ausgestaltbar sind. Dabei wird klar, daß sowohl die Zentrierhülse 552 als auch die Hubstange 618 radiale Nocken 554 bzw. 654 tragen können, wenn jeweils die Gegenseiten Rastnuten 555, 556 zur Aufnahme der Nocken 554, 654 aufweisen. Umgekehrt können sowohl die Hubstange 518 als auch die Zentrierhülse 652 Rastnuten 655, 656 tragen.

Aus dem Vergleich der Figuren 12, 13 mit den Figuren 14, 15 wird auch klar, daß die Hubstangen 518, 618, 718, 818 gegenüber den Zentrierhülsen 552, 652, 752, 852 entweder außen oder innen angeordnet sein können, mit der entsprechenden Ausgestaltung der Rastmittel 554, 555, 654, 655, 754, 755, 854, 855.

In Figur 16 ist eine Hubstange 918 mit einer Einrichtung 920 zum Spannen eines Sägeblatts 922 gezeigt, bei der im Unterschied zum Ausführungsbeispiel gemäß den Figuren 2, 3 die Zentrierhülse 952 im Inneren der Hubstange 918 drehfest axialverschieblich gehalten angeordnet ist.

Die zylindrische Zentrierhülse besitzt zwei gegenüberliegende gestufte, d.h abgewinkelte Nutenbahnen, die je eine Schrägfläche 953, 954 bilden. Mit den Schrägflächen 953, 954 sind durch Axialverschiebung der Zentrierhülse 952 Rastkugeln 953', 954' in Radialbohrungen 968, 969 im unteren Bereich der Hubstange 918 radial verschiebbar.

Der weitere Aufbau der Einrichtung 920 ist ähnlich dem der Figuren 2 und 3: Die schlanke Hubstange 918 geht radial nach außen sufenartig in ein bundartiges Außen-Gewindestück 926 über. Im Anschluß daran verläuft die Kontur der Hubstange 918 stufenartig radial nach innen und führt von dort mit verringertem Durchmesser im wesentlichen gerade bis zur Unterkante 932. Die Hubstange 918 trägt im Bereich nahe ihrer Unterkante 932 auf gegenüberliegenden Seiten je eine Radialbohrung 968, 969.

Im Inneren weist die Hubstange 918 eine zentrale axiale Stufenbohrung 927 auf, die dem unteren Bereich der Hubstange 918 seine rohrartige Gestalt gibt. Die zentrale Stufenbohrung 927 endet in einer Konusbohrung 933.

Auf dem Außen-Gewindestuck 926 der Hubstange 918 ist eine Spannhülse 940 gewindegeführt angeordnet. Die Spannhülse 940 geht in ihrem unteren Bereich radial nach innen in einen Kragen 946 über, dessen Innenkontur durch eine Durchtrittsöffnung 948 und einen radialen Schlitz 947 gebildet wird. Die Spannhülse 940 trägt benachbart zu den Radialbohrungen 968, 969 der Hubstange 918 auf ihrem Innenumfang jeweils eine Rastnut 955, 956.

Die Hubstange 918 und die Spannhülse 940 sind über eine Drehfeder 942 vorgespannt miteinander gekoppelt, wobei das untere Federende 943 in eine radiale Ausnehmung 943' in der Hubstange 918 und das obere Federende 944 in eine radiale Ausnehmung 944' der Spannhülse 940 greift. Durch eine entsprechende Vorspannung der Drehfeder 942 wird die Spannhülse 940 gegenüber dem Außengewindestück 926 in einer axial nach oben geschobenen Anschlagposition gehalten.

An der oberen Stirnseite 957 der Zentrierhülse 952 stützt sich eine Druckfeder 958 ab, die die Zentrierhülse 952 gegenüber der Hubstange 918 nach unten zu drücken sucht. In einem radialen Zwischenraum zwischen dem zylindrischen Bereich 951 der Zentrierhülse 952 und der Stufenbohrung 927 sind Rastkugeln 953', 954' angeordnet. Diese sitzen in den Radialbohrungen 968, 969 in der Wand der Hubstange 918.

In der Konusbohrung 933 im oberen Bereich der Hubstange 918 ist die Schmalseite des oberen Bereichs des Sägeblatteinspannendes 925 zentriert und gespannt. Die oberen Stirnseiten der Sägeblattnasen 949, 950 sind in einer V-Nut 960 der unteren Stirnseite 959 der Zentrierhülse 952 zentriert. An den unteren Stirnseiten der Sägeblattnasen 949, 950 stützt sich die Stirn-Innenseite 946' des Kragens 946 der Spannhülse 940 ab. Die Innenstirnseite 946' hält somit das Sägeblatt 922 gegen Austreten nach unten bzw. gegen Verlieren sicher in der Einrichtung 920 fest.

In Figur 17 zeigt eine Ansicht der Einrichtung 920 von unten die Spannhülse 940 mit der Ausgestaltung ihrer Durchtrittsöffnung 948, dem Radialschlitz 947 bzw. dem Kragen 946.

Die Einrichtung 920 arbeitet auf folgende Weise: Zum Lösen des Sägeblatts 922 wird die Spannhülse 940 in ihrem Gewinde gegenüber dem Außen-Gewindestück 926 verdreht, wobei durch die Gewindeverbindung am Außengewindestück 926 gleichzeitig eine axiale Verschiebung nach unten erfolgt. In einer bestimmten Anschlagposition ist ein Weiterdrehen der Spannhülse 940 nicht möglich, wobei in dieser Position die Rastnuten 955, 956 mit den Radialbohrungen 968, 969 fluchten.

Der axialen Verschiebung der Spannhülse 940 folgt das Sägeblatt 922 axial nach unten. Dem Sägeblatt 922 folgt dabei die Zentrierhülse 52 infolge der Beaufschlagung durch die Druckfeder 958, mit der Zentriernut 960 abgestützt an der Sägeblattnase 949, 950. Dabei kommen die Schrägflächen 953, 954 zur Anlage an die Rastkugeln 953', 954' und verschieben diese radial nach außen. Dabei treten die Rastkugeln 953', 954' in die Rastnuten 955, 956 ein. Infolge der Kraft der Druckfeder 958 wird über die Zentrierhülse 952 die Position der Rastkugeln 953', 954' gesichert, wobei sich die Kugeln 953', 954' am größeren Durchmesserbereich der Zentrierhülse 952 radial abstützen. Durch die Wirkung der Rastkugeln 953', 954' ist die Spannhülse 954 in ihrer Verdrehlage verriegelt. Die Spannhülse 940 kann sich nicht in ihre Ausgangsstellung zurückbewegen, wobei deren Radialschlitz 947 in der Geöffnet-Position mit der Ebene des Sägeblatts 922 fluchtet, kann das Sägeblatt 922 leicht nach unten entnommen werden. Bei schnellem Ablauf der beschriebenen Funktionen kommt es zu einem Auswurf des Sägeblatts 922.

Zum Einsetzen eines neuen Sägeblatts 922 wird dieses mit seinem Einspannende 925 in die Durchtrittsöffnung 948 bzw. den Radialschlitz 947 der Spannhülse 940 axial nach oben eingeführt. Sobald die oberen Stirnseiten der Sägeblattnasen 949, 950 an der Zentriernut 960, 961 zur Anlage kommen, wird die Zentrierhülse 952 gemeinsam mit dem Sägeblatt 922 axial nach oben entgegen der Druckfeder 958 bewegt. Die Zentrierhülse 952 gibt über die Schrägflächen 953, 954 die Rastkugeln 953', 954' frei. Infolge der Wirkung der Drehfedern 942 und der daraus resultierenden Verdrehwirkung der Spannhülse 940 werden die Rastkugeln 953', 954' aus den Rastnuten 955, 954 zurück in den radialen Zwischenraum zwischen der Zentrierhülse 952 und der zentralen Stufenbohrung 927 befördert. Die Spannhülse 940 ist nun entriegelt, kann sich weiterdrehen und sich dabei gleichzeitig axial nach oben verschieben. Dabei verdreht sich der radiale Schlitz 947 gegenüber den Sägeblattnasen 950, 949, so daß die Innen-Stirnseiten 946' des Kragens 946 die unteren Stirnseiten der Sägeblattnasen 949, 950 axial beaufschlagen und weiter axial nach oben verschieben, bis das Sägeblatteinspannende 925 in der Konusbohrung 933 zentriert anliegt. Damit ist das Sägeblatt 922 zentriert und gespannt bzw. gegen Heraustreten aus der Einrichtung 920 gesichert.

In den Figuren 18, 19, 20 ist ein weiteres Ausführungsbeispiel einer Einrichtung 1020 zum Spannen eines Sägeblatts 1022 gezeigt. Im Unterschied zur Variante gemäß den Figuren 16, 17 ist nur der obere Bereich des Einspannendes 1025 in einem Zentrierstück 1052 in einer oberen Zentriernut 1060 geführt. Die Sägeblattnasen 1049, 1050 stützen sich zentrierend in einer unteren Zentriernut 1060, 1061 ab, die in der unteren Stirnseite 1059 der Hubstangen 1018 eingearbeitet ist.

Die Hubstange 1018 trägt in ihrem unteren Bereich ein Außengewindestück 1026, das mit einem Innengewinde einer Spannhülse 1040 verschraubt ist.

Im Inneren des oberen Bereichs der Hubstange 1018 ist eine Druckfeder 1058 angeordnet, die das Zentrierstück 1052 axial beaufschlagt. Das Zentrierstück 1052 trägt eine umlaufende Schrägfläche 1053. Diese beaufschlagt bei axialer Verschiebung die Rastkugeln 1053', 1054', die in Radialbohrungen 1068, 1069 in der Wand der Hubstange 1018 sitzen. Der obere, den Radialbohrungen 1068, 1069 benachbarte Wandbereich der Spannhülse 1040 trägt Kugelrastnuten 1055, 1056, die in der oberen Spannposition der Spannhülse 40 gegenüber den Radialbohrungen 1068, 1069 axial und radial versetzt sind.

Zwischen der Außenwand der Hubstange 1018 und der Innenwand der Spannhülse 1040 ist eine Drehfeder 1042 mit einem oberen Federende 1044 und einem unteren Federende 1043 angeordnet. Die Federenden 1043, 1044 halten sich in näher bezeichneten Durchbrüchen einenends an der Hubstange 1018 und anderenends der Spannhülse 1040 fest.

In Figur 20 ist eine Ansicht der Spannhülse 1040 gemäß Figur 18 von unten gezeigt, wobei im wesentlichen Übereinstimmung mit der Figur 17 bei der Ausgestaltung des Radialschlitzes 1047, der Durchtrittsöffnung 1048, bzw. des Kragens 1046 besteht.

Die Funktionsweise ist folgende: Zum Lösen des Sägeblatts 1022 wird die Spannhülse 1040 gegenüber der Hubstange 1018 so verdreht, daß sie sich axial nach unten bewegt. In einer unteren Anschlagstellung, in der der Radialschlitz 1047 zur Mittelebene des Sägeblatts 1022 fluchtet, fluchten auch die Kugelrastnuten 1055, 1056 mit den Radialbohrungen 1068, 1069, so daß die Rastkugeln 1053', 1054' radial nach außen in die Kugelnrastnuten 1055, 1056 treten und damit die Drehposition der Spannhülse 1040 verriegeln gegenüber der Hubstange 1018. Die Rastkugeln 1053, 1054 werden radial nach außen gedrückt gehalten durch die Wirkung der Schrägfläche 1053 bei axialer Verschiebung des Zentrierstücks 1052. Das Zentrierstück 1052 folgt der Kraft der Druckfeder 1058 axial nach unten und der Bewegung des Sägeblatts 1022, welches der Axialbewegung der Spannhülse 1040 nach unten folgt.

In der verriegelten Stellung der Spannhülse 1040 gegenüber der Hubstange 1018 ist das Sägeblatt 1022 leicht entnehmbar.

Bei schneller Folge der vorbeschriebenen Funktionsabläufe wird das Sägeblatt 1022 ausgeworfen. Das Sägeblatt 1022 muß also nicht nach unten gerichtet entnommen werden, sondern dies kann auch leicht bei waagerechter Positionierung der Sägeblattachse bzw. senkrecht nach oben gerichteten Sägeblatt geschehen.

Zum Spannen des Sägeblatts wird ein neues Sägeblatt mit seinem Einspannende 1025 in die Durchtrittsöffnung 1048 bzw. dem radialen 1047 axial nach oben bzw. in Richtung zum Zentrierstück 1052 eingeführt. Zunächst kommt das freie Ende des Einspannendes 1025 zur Anlage in die Zentriernut 1060 des Zentrierstücks 1052. Das Zentrierstück 1052 folgt der Axialbewegung des Sägeblatts 1052 und wird mit diesem in der Hubstange 1018 nach oben verschoben. Entgegen der Kraft der Druckfeder 1058. Dabei gibt das Zentrierstück 1052 über die Schrägflächen 1053 die Rastkugeln 1053', 1054' frei, so daß diese durch die Verdrehkraft der Drehfeder 1042 sozusagen ausgeworfen werden aus den Kugelrastnuten 1055, 1056. Dadurch kann sich die Spannhülse 1040 gegenüber der Hubstange 1018 sehr nach oben in ihre Spannposition nach oben bewegen, infolge der Verdrehung durch die Drehfeder 1042. Dadurch, daß sich der Radialschlitz 1047 gegenüber der Ebene des Sägeblatts 1022 verdreht, untergreift der Kragen 1046 die Sägeblattnasen 1049, 1050 und verschiebt das Sägeblatt 1022 axial in seine Endposition bis zur Anlage der oberen Stirnflächen der Nasen 1045, 1050 in der unteren Zentriernut 1060, 1061. In dieser Position ist das Sägeblatt 1022 zentriert, gespannt und gegen Verlieren gesichert.

In Figur 19 ist eine Schnittdarstellung der Kugelrastnut 1055, 1056 der Spannhülse 1040 mit halbkreisförmiger Kontur gezeigt. Durch diese Kontur wird das Herausschieben der Rastkugeln 1053', 1054' beim Entriegeln der Spannhülse 40 bewirkt.

In Figur 21 ist ein weiteres Ausführungsbeispiel einer Einrichtung 1120 zum Spannen eines Sägeblatts gezeigt, wobei ein Zentrierstück 1152 axial verschieblich gegenüber einer Spannhülse 1140 angeordnet ist, wobei eine Arretierkugel 1153' durch die Gestaltung einer Rastnut 1155 einen zylindrischen Bereich 1151 des Zentrierstücks 1152 radial beaufschlagt und durch die Wirkung der nicht mitdargestellten Drehfeder klemmend festhält. In der Offen-Stellung ohne Sägeblatt, ist die Spannhülse 1140 nur in eine Richtung drehbar. Sobald ein Sägeblatt eingeführt wird und damit das Zentrierstück 1152 angehoben wird, dreht sich die Spannhülse 1140 selbsttätig zurück in die Spannposition.

In Figur 22 ist ein Schnitt entlang der Pfeile AA gemäß Figur 21 gezeigt, aus dem die Kontur die Rastnut 1155 sowie die Position der Arretierkugel 1153' in der Klemmposition und in der Löseposition deutlich. wird. Insbesondere der radial nach außen ansteigende Verlauf der Außenkontur der Rastnut 1155 wird deutlich.

Beim Einführen eines Sägeblattes wird das Zentrierstück 1152 gegenüber der Hubstange/Spannhülse nach oben verschoben. Das Zentrierstück 1152 kann sich freilaufartig verdrehen. Wenn kein Sägeblatt vorhanden ist, dann hebt das Zentrierstück 1152 das Spiel auf. Bei Drehung in Schließrichtung erfolgt eine Klemmung.

## Patentansprüche

1. Stichsägemaschine (10) mit einer Einrichtung (20, 1020, 1120) zum Spannen des Sägeblatts (22, 922, 1022) am unteren Ende einer Hubstange (18, 918, 1018, 1118), wobei eine axial verschieblich und drehbar an der Hubstange (18, 918, 1018, 1118) angeordnete Spannhülse (40, 140, 240, 340, 440, 940, 1040, 1140, 1240) an ihrem freien unteren Ende einen nach innen ragenden, umlaufenden Kragen (46, 146, 946, 1046, 1146) mit einer Durchtrittsöffnung (48, 148, 948, 1048, 1148) und einem radialen Schlitz (47, 147, 947, 1047, 1147) besitzt, wobei sich der Kragen (46, 146, 946, 1046, 1146) in der Spannposition axial gegen Nasen (49, 50, 1049, 1150) des Sägeblatts (22, 1022, 1122) abstützt und damit das Sägeblatteinspannende (25, 1025, 1125) in einer Aufnahme am unteren Endabschnitt der Hubstange (18, 918, 1018, 1118) bzw. gegen ein federndes Zwischenstück (52, 152, 252, 352, 452, 552, 652, 752, 852, 952, 1052, 1152) gedrückt hält, dadurch gekennzeichnet, daß die Einrichtung (20, 1020, 1120) Arretiermittel (53, 54, 153, 154, 255, 256, 355, 356, 953', 954' , 1053', 1054', 1153') trägt, die die Spannhülse (40, 140, 240, 340, 440, 540, 640, 740, 840, 940, 1040, 1140, 1240) gegenüber der Hubstange (18, 918, 1018, 1118) in der Freigabeposition für das Sägeblatt (22, 1022, 1122) festhalten und die durch das Einsetzen des Sägeblatts (22, 1022, 1122) in die Einrichtung (20, 1020, 1120) die Spannhülse (40, 140, 240, 340, 440, 540, 640, 740, 840, 940, 1040, 1140, 1240) wieder freigeben.

2. Stichsägemaschine nach Anspruch 1, dadurch gekennzeichnet, daß die Arretiermittel (53, 54, 153, 154, 255, 256, 355, 356, 953', 954', 1053', 1054', 1153') gegenüber der Hubstange (18, 918, 1018, 1118) und der Spannhülse (40, 140, 240, 340, 440, 540, 640, 740, 840, 940, 1040, 1140, 1240) verstellbar sind und diese gegeneinander in der Freigabestellung für das Sägeblatt (22, 922, 1022) lösbar verriegeln.

3. Stichsägemaschine nach Anspruch 1 oder 2, dadurch gekennzeichnet, daß die Arretiermittel (53, 54, 153, 154, 255, 256, 355, 356, 953', 954', 1053', 1054', 1153') durch ein federmittelgestütztes Verschiebestück (52, 152, 252, 352, 452, 552, 652, 752, 852, 952, 1052, 1152) verstellbar sind.

4. Stichsägemaschine nach einem der vorhergehenden Ansprüche, dadurch gekennzeichnet, daß das Verschiebestück (52, 152, 252, 352, 452, 552, 652, 752, 852, 952, 1052, 1152) als Zentrierhülse mit Zentriernuten (60, 61) ausgestaltet ist, an denen sich das Sägeblatt (22, 1022, 1122), insbesondere mit seinen Nasen (49, 50; 1049, 1050), positionierend abstützt.

5. Stichsägemaschine nach Anspruch 4, dadurch gekennzeichnet, daß die Zentrierhülse (52, 152) Außennocken (53, 54; 153, 154) trägt, die zur Bildung der Arretiermittel in Rastnuten (55, 56; 155, 156) der Spannhülse (40, 140) treten,

6. Stichsägemaschine nach Anspruch 4, dadurch gekennzeichnet, daß sich die Zentrierhülse (952, 1052, 1152) über Schrägflächen (953, 954, 1053, 1054, 1153, 1154) an Rastkugeln (953', 954') abstützt und diese bei axialer Bewegung radial in Rastnuten (955, 956, 1055, 1056, 1155, 1156) der Spannhülse (940, 1040, 1140) verdrängt.

7. Stichsägemaschine nach einem der vorhergehenden Ansprüche, dadurch gekennzeichnet, daß die Spannhülse (40, 940, 1040) gegenüber der Hubstange (18, 918, 1018) über ein Außengewindestück(26, 926, 1026) am Endabschnitt, insbesondere nahe der Unterkante (32, 932, 1032), der Hubstange (18, 918, 1018) axial geführt ist

8. Stichsägemaschine nach einem der vorhergehenden Ansprüche, dadurch gekennzeichnet, daß sich das Sägeblatteinspannende (925) an einem Zentrierschlitz (933, 934, 935) der Hubstange (918) zentrierend abstützt.

9. Stichsägemaschine nach einem der vorhergehenden Ansprüche, dadurch gekennzeichnet, daß das Verschiebestück als Zentrierstück (1052) ausgestaltet ist, an dessen als Zentrierbohrung ausgestalteter Zentriernut (1060) sich das äußerste Ende des Sägeblatteinspannendes (1025) abstützt.

10. Spanneinrichtung (20) für eine Stichsägemaschine nach dem Oberbegriff des Anspruchs 1, dadurch gekennzeichnet, daß sie Arretiermittel (53, 54, 153, 154, 255, 256, 355, 356, 953', 954', 1053', 1054', 1153') trägt, die die Spannhülse (40, 140, 240, 340, 440, 540, 640, 740, 840, 940, 1040, 1140, 1240) gegenüber der Hubstange (18, 918, 1018, 1118) in der Freigabeposition für das Sägeblatt (22, 1022, 1122) festhalten und die durch das Einsetzen des Sägeblatts (22, 1022, 1122) in die Einrichtung (20, 1020, 1120) die Spannhülse (40, 140, 240, 340, 440, 540, 640, 740, 840, 940, 1040, 1140, 1240) wieder freigeben.

## Claims

1. Jigsaw machine (10) having a device (20, 1020, 1120) for clamping the saw blade (22, 922, 1022) at the bottom end of a stroke rod (18, 918, 1018, 1118), a clamping sleeve (40, 140, 240, 340, 440, 940, 1040, 1140, 1240) arranged so as to be axially displaceable and rotatable on the stroke rod (18, 918, 1018, 1118) having, at its free bottom end, an encircling collar (46, 146, 946, 1046, 1146), which projects inwards and has a passage opening (48, 148, 948, 1048, 1148) and a radial slot (47, 147, 947, 1047, 1147), the collar (46, 146, 946, 1046, 1146), in the clamping position, being supported axially against lugs (49, 50, 1049, 1150) of the saw blade (22, 1022, 1122) and thus keeping the saw-blade clamping end (25, 1025, 1125) pressed in a receptacle at the bottom end section of the stroke rod (18, 918, 1018, 1118) or against a spring-mounted intermediate piece (52, 152, 252, 352, 452, 552, 652, 752, 852, 952, 1052, 1152), characterized in that the device (20, 1020, 1120) has locking means (53, 54, 153, 154, 255, 256, 355, 356, 953', 954', 1053', 1054', 1153') which secure the clamping sleeve (40, 140, 240, 340, 440, 540, 640, 740, 840, 940, 1040, 1140, 1240) relative to the stroke rod (18, 918, 1018, 1118) in the release position for the saw blade (22, 1022, 1122) and which release the clamping sleeve (40, 140, 240, 340, 440, 540, 640, 740, 840, 940, 1040, 1140, 1240) again by the insertion of the saw blade (22, 1022, 1122) into the device (20, 1020, 1120).

2. Jigsaw machine according to Claim 1, characterized in that the locking means (53, 54, 153, 154, 255, 256, 355, 356, 953', 954', 1053', 1054', 1153') are adjustable relative to the stroke rod (18, 918, 1018, 1118) and the clamping sleeve (40, 140, 240, 340, 440, 540, 640, 740, 840, 940, 1040, 1140, 1240) and releasably lock the latter against one another in the release position for the saw blade (22, 922, 1022).

3. Jigsaw machine according to Claim 1 or 2, characterized in that the locking means (53, 54, 153, 154, 255, 256, 355, 356, 953', 954', 1053', 1054', 1153') are adjustable by a spring-means-supported displacing piece (52, 152, 252, 352, 452, 552, 652, 752, 852, 952, 1052, 1152).

4. Jigsaw machine according to one of the preceding claims, characterized in that the displacing piece (52, 152, 252, 352, 452, 552, 652, 752, 852, 952, 1052, 1152) is designed as a centring sleeve having centring grooves (60, 61), on which the saw blade (22, 1022, 1122) is supported in a positioning manner, in particular with its lugs (49, 50; 1049, 1050).

5. Jigsaw machine according to Claim 4, characterized in that the centring sleeve (52, 152) has external lobes (53, 54; 153, 154) which move into catch grooves (55, 56; 155, 156) of the clamping sleeve (40, 140) to form the locking means.

6. Jigsaw machine according to Claim 4, characterized in that the centring sleeve (952, 1052, 1152) is supported via sloping surfaces (953, 954, 1053, 1054, 1153, 1154) on catch balls (953', 954') and displaces the latter into catch grooves (955, 956, 1055, 1056, 1155, 1156) of the clamping sleeve (940, 1040, 1140) during axial movement.

7. Jigsaw machine according to one of the preceding claims, characterized in that the clamping sleeve (40, 940, 1040) is axially guided relative to the stroke rod (18, 918, 1018) via an externally threaded piece (26, 926, 1026) on the end section, in particular close to the bottom edge (32, 932, 1032), of the stroke rod (18, 918, 1018).

8. Jigsaw machine according to one of the preceding claims, characterized in that the saw-blade clamping end (925) is supported in a centring manner on a centring slot (933, 934, 935) of the stroke rod (918).

9. Jigsaw machine according to one of the preceding claims, characterized in that the displacing piece is designed as a centring piece (1052), on whose centring groove (1060), designed as a centring bore, the outermost end of the saw-blade clamping end (1025) is supported.

10. Clamping device (20) for a jigsaw machine according to the preamble of Claim 1, characterized in that it has locking means (53, 54, 153, 154, 255, 256, 355, 356, 953', 954', 1053', 1054', 1153') which secure the clamping sleeve (40, 140, 240, 340, 440, 540, 640, 740, 840, 940, 1040, 1140, 1240) relative to the stroke rod (18, 918, 1018, 1118) in the release position for the saw blade (22, 1022, 1122) and which release the clamping sleeve (40, 140, 240, 340, 440, 540, 640, 740, 840, 940, 1040, 1140, 1240) again by the insertion of the saw blade (22, 1022, 1122) into the device (20, 1020, 1120).

## Revendications

1. Scie à guichet motorisée (10) comportant :
- un dispositif (20, 1020, 1120) de serrage de la lame de scie (22, 922, 1022) monté à l'extrémité d'une tige coulissante (18, 918, 1018, 1118), dans laquelle,
- sur la tige (18, 918, 1018, 1118) peut coulisser axialement et tourner une douille de serrage (40, 140, 240, 340, 444, 940, 1040, 1140, 1240) présentant à son extrémité inférieure libre un collet périphérique débordant vers l'intérieur (46, 146, 946, 1046, 1146) percé d'une ouverture de passage (48, 148, 948, 1048, 1148) et d'une fente radiale (47, 147, 947, 1047, 1147),
- en position de serrage le collet (46, 146, 946, 1046, 1146) est en appui axial sur des ergots (49, 50, 1049, 1050) de la lame de scie (22, 1022, 1122) et maintient ainsi l'extrémité de serrage (25, 1025, 1125) de la lame à l'intérieur d'un logement prévu à l'extrémité inférieure de la tige coulissante (18, 918, 1018, 1118) et en appui sur une pièce intermédiaire élastique (52, 152, 252, 352, 452, 552, 652, 752, 852, 952, 1052, 1152),
caractérisée en ce que
le dispositif (20, 1020n 1120) porte des moyens d'arrêt (53, 54, 153, 154, 255, 256, 355, 356, 953', 954', 1053', 1054', 1153') qui maintiennent la douille de serrage (40, 140, 240, 340, 440, 540, 640, 740, 840, 940, 1040, 1140, 1240), par rapport à la tige coulissante (18, 918, 1018, 1128) dans une position libérant la lame de scie (22, 1022, 1122) et qui, lorsqu'on introduit la lame de scie (22, 1022, 1122) dans le dispositif (20, 1020, 1120) libèrent à nouveau la douille de serrage (40, 140, 240, 340, 440, 540, 640, 740, 840, 940, 1040, 1140, 1240).

2. Scie à guichet motorisée selon la revendication 1,
caractérisée en ce que
les moyens d'arrêt (53, 54, 153, 154, 255, 256, 355, 356, 953', 954', 1053', 1054', 1153') peuvent se déplacer par rapport à la tige coulissante (18, 918, 1018, 1118) et par rapport à la douille de serrage (40, 140, 240, 340, 440, 540, 640, 740, 840, 940, 1040, 1140, 1240) et verrouillent ces pièces l'une par rapport à l'autre, de manière amovible dans la position de libération de la lame de scie (22, 922, 1022).

3. Scie à guichet motorisée selon la revendication 1 ou 2,
caractérisée en ce que
les moyens d'arrêt (53, 54, 153, 154, 255, 256, 355, 356, 953', 954', 1053', 1054', 1153') peuvent être déplacés par l'action d'une pièce coulissante a appui élastique (52, 152, 252, 352, 452, 552, 652, 752, 852, 952, 1052, 1152).

4. Scie à guichet motorisée selon une des revendications précédentes,
caractérisée en ce que
la pièce coulissante (52, 152, 252, 3521, 452, 552, 652, 752, 852, 952, 1052, 1152) est une douille de centrage comportant des encoches de centrage (60, 61) dans lesquelles la lame de scie (22, 1022, 1122) vient se positionner en appui, en particulier par ses ergots (49, 50, 1049, 1050).

5. Scie à guichet motorisée selon la revendication 4,
caractérisée en ce que
la douille de centrage (52, 152) porte des dents externes (53, 54, 153, 154) qui pénètrent dans des encoches d'arrêt (55, 56, 155, 156) de la douille de serrage (40, 140) pour former les moyens d'arrêt.

6. Scie à guichet motorisée selon la revendication 4,
caractérisée en ce que
la douille de centrage (652, 1052, 1152) s'appuie par l'intermédiaire de portées inclinées (953, 954, 1053, 1054, 1153, 1154) sur des billes d'arrêt (953', 954') et, en se déplaçant axialement les fait pénétrer radialement dans des encoches d'arrêt (955, 956, 1055, 1056, 1155, 1156) de la douille de serrage (940, 1040, 1140).

7. Scie à guichet motorisée selon une des revendications précédentes,
caractérisée en ce que
la douille de serrage (40, 940, 1040) peut se déplacer axialement par rapport à la tige coulissante (18, 918, 1018) par guidage sur une pièce filetée extérieurement (26, 926, 1026) montée à l'extrémité de la tige (18, 918, 1018) en particulier près du bord inférieur (32, 932, 1032) de celle-ci.

8. Scie à guichet motorisée selon une des revendications précédentes,
caractérisée en ce que
l'extrémité (925) de serrage de la lame s'appuie avec centrage sur une fente de centrage (933, 934, 955) de la tige coulissante (918).

9. Scie à guichet motorisée selon une des revendications précédentes,
caractérisée en ce que
la pièce coulissante est une pièce de centrage (1052) comportant une encoche de centrage (1060) constituée par un alésage de centrage sur lequel s'appuie le bout de l'extrémité de serrage (1025) de la lame.

10. Dispositif de serrage (20) pour une scie à guichet motorisée selon l'exposé introductif de la revendication 1,
caractérisé en ce qu'
il comporte des moyens d'arrêt (53, 54, 153, 154, 255, 256, 355, 356, 953', 954', 1053', 1054', 1153') qui maintiennent la douille de serrage (40, 140, 240, 340, 440, 540, 640, 740, 840, 940, 1040, 1140, 1240), par rapport à la tige coulissante (18, 918, 1018, 1118) dans une position libérant la lame de scie (22, 1022, 1122) et qui lorsqu'on introduit cette lame (22, 1022, 1122) dans le dispositif (20, 1020, 1120) libèrent à nouveau la douille de serrage (40, 140, 240, 340, 440, 540, 640, 740, 840, 940, 1040, 1140, 1240).
